# EUROPÄISCHE PATENTSCHRIFT

(11) **EP 2 054 330 B1**
(45) Veröffentlichungstag und Bekanntmachung des Hinweises auf die Patenterteilung: **09.11.2016**
(21) Anmeldenummer: 07786296.9
(22) Anmeldetag: 24.07.2007
(51) Int. Cl.: B65G 47/71, B65G 47/64

(54) **VORRICHTUNG UND VERFAHREN ZUM ÜBERGEBEN EINER GRUPPE VON PRODUKTEN VON EINEM EINGANGSFÖRDERER AN EINEN AUSGANGSFÖRDERER**
DEVICE AND METHOD FOR TRANSFERRING A GROUP OF PRODUCTS FROM AN INPUT CONVEYOR TO AN OUTPUT CONVEYOR
DISPOSITIF ET PROCÉDÉ POUR LE TRANSFERT D'UN GROUPE DE PRODUITS D'UN CONVOYEUR D'ENTRÉE À UN CONVOYEUR DE SORTIE

(30) Priorität: 20.09.2006 DE 102006044286
(43) Veröffentlichungstag der Anmeldung: 06.05.2009
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2007/006570
(87) Internationale Veröffentlichungsnummer: WO 2008/034482

(56) Entgegenhaltungen:
- EP-A- 0 371 687
- EP-A- 1 291 305
- EP-A- 1 683 746
- DE-A1- 2 109 363
- DE-A1- 2 543 567
- DE-A1- 3 720 638
- DE-C- 619 395
- US-A- 3 848 725
- US-A- 5 768 856
- US-A- 5 967 290

## Beschreibung

Die vorliegende Erfindung betrifft eine Vorrichtung zum Transport von Lebensmittelprodukten, insbesondere von mittels eines oder mehrerer Slicer erzeugten Produktscheiben, gemäß Anspruch 1. Außerdem betrifft die Erfindung ein Transportverfahren gemäß Anspruch 10.

DE 25 34 567 A1 beschreibt ein Verfahren nach dem Oberbegriff des Anspruchs 10 und eine Vorrichtung nach dem Oberbegriff des Anspruchs 1 zur Übergabe von Artikeln von einem Zuführförderer zu einem empfangenden Förderer, wobei zwischen dem Zuführförderer und dem empfangenden Förderer ein Übergabeförderer zwischengeschaltet ist, um die Artikel kontinuierlich von dem Zuführförderer zu dem empfangenden Förderer zu übertragen. Insbesondere werden dabei die Artikel von einem Band des Übergabeförderers abgekippt, indem diese wie eine Schaukel durch Verschwenkung eines Tragzylinders verschwenkt wird.

EP 0 371 687 A1 beschreibt eine Vorrichtung, bei der Arbeitsstücke von einem Bandförderer in Aushöhlungen einer geformten Packung gebracht werden, welches transversal zur Bewegung des Bandförderers bewegt wird. Die Arbeitsstücke werden über eine Trageinheit vom Förderband zum Zielort gebracht.

DE 2 109 363 A1 beschreibt eine Transportwegsteuerung zur Steuerung des Transportweges mehrere Elemente. Eine Elementzuführeinrichtung weist ein Transportband auf, das eine Transportbewegung ausführt, die senkrecht zur Transportbewegungsebene einer Elementtransporteinrichtung gerichtet ist. Die Elementzuführeinrichtung ist um eine Achse gekippt, wobei die Kippachse auf der Längsseite des Transportbandes angeordnet ist.

US 5,967,290 A zeigt eine bewegliche Trommel, die ein Endlosförderband mit einem oberen und einen unteren Teil umfasst. Die Trommel kann um eine longitudinale Achse verschwenken, die zwischen dem oberen und dem unteren Teil des Förderbandes verläuft. Einerseits kann die Trommel als Förderer dienen und andererseits Pakete jeweils einzeln aus der Förderstrecke auswerfen.

Bei der Verarbeitung von Lebensmittelprodukten - insbesondere beim Transport von Produktscheiben, die durch Aufschneiden von Produktlaiben (beispielsweise Käse, Wurst, Schinken und Bacon) mittels auch als Slicer bezeichneten Schneidemaschinen erzeugt werden, von der Schneidemaschine zu nachgeordneten Bearbeitungsstationen (wie beispielsweise einem Ofen zur Fertiggarung von Baconscheiben) - besteht das Bedürfnis, die Produkte von einem den Schneidemaschinen nachgeordneten Förderer an einen weiteren Förderer (Ausgangsförderer) zu übergeben, welcher die Produktscheiben der nachgeordneten Bearbeitungsstation zuführt, dessen Förderrichtung quer zur Transportrichtung der einlaufenden Produktscheiben verlaufen kann. Der Ausgangsförderer kann dabei eine verhältnismäßig große, je nach Anwendung variierende Breite aufweisen, wobei aber jeweils mehrere Produktscheiben gleichzeitig in nebeneinander liegenden, quer zur Förderrichtung des Ausgangsförderers verlaufenden Reihen oder "Spuren" der Bearbeitungsstation, z.B. dem Ofen, zugeführt werden können.

Diese reihenartige Anordnung der einzelnen Produktscheiben quer zur Förderrichtung kann beispielsweise in grundsätzlich bekannter Weise dadurch erzielt werden, dass die einzelnen Produktscheiben zunächst an einen so genannten Sprungbandförderer übergeben werden, welcher die Produktscheiben einzeln an den Ausgangsförderer übergibt. Bei dem Sprungbandförderer handelt es sich z.B. um ein frei auskragendes Endlosband, welches an seinem freien Ende die nacheinander einlaufenden Produktscheiben einzeln an den Ausgangsförderer übergibt. Dabei wird der Sprungbandförderer während der Übergabe quer zur Förderrichtung des Ausgangsförderers zurückgezogen, so dass die einzelnen Produktscheiben über die gesamte Breite des Ausgangsförderers abgelegt werden. Damit bei dieser Übergabe die einzelnen Produktscheiben jedoch nicht infolge der Förderbewegung des Ausgangsförderers diagonal auf diesem abgelegt werden, wird der Ausgangsförderer zur Übergabe angehalten, was in unerwünschter Weise zu einem Verarbeitungsstillstand führt bzw. aufwändige Pufferungsmaßnahmen erfordert und somit die Produktivität der gesamten Anlage senkt.

Es ist die Aufgabe der vorliegenden Erfindung, den Produkttransport und insbesondere die Produktübergabe zu verbessern.

Die der Erfindung zugrunde liegende Aufgabe wird durch die Merkmale des Anspruchs 1 und insbesondere dadurch gelöst, dass zumindest eine Übergabestation vorgesehen ist, die zum Aufnehmen von Lebensmittelprodukten eines von zumindest einem Eingangsförderer einlaufenden Eingangsproduktstroms und zum Übergeben der Lebensmittelprodukte an einen Ausgangsförderer dient, wobei die Übergabestation eine Übergabeeinrichtung umfasst, die dazu ausgebildet ist, eine Gruppe nacheinander aufgenommener Lebensmittelprodukte gleichzeitig an den Ausgangsförderer zu übergeben. Die Übergabeeinrichtung ist hierbei als Schwenkmechanismus ausgebildet. Die zu übergebenden Produkte werden gewissermaßen einfach "abgekippt". Die als Übergabeförderer ausgebildete Übergabestation ist als Endlosbandförderer mit einem Obertrum und einem Untertrum ausgebildet, wobei sich die Schwenkachse in Förderrichtung des Übergabeförderers zwischen dem Obertrum und dem Untertrum erstreckt.

Die Übergabestation dient somit gewissermaßen als Sammelstation, im Bereich derer eine Gruppe an nacheinander einlaufenden Lebensmittelprodukten zunächst gesammelt wird, um diese anschließend gleichzeitig an den Ausgangsförderer zu übergeben. Hierdurch findet eine Art Parallelisierung des Eingangsproduktstromes statt, denn die Produkte erreichen die Übergabestation nacheinander, verlassen diese dagegen gleichzeitig.

Der Übergangsförderer erstreckt sich oberhalb des Ausgangsförderers.

In vorteilhafter Weise kann durch die Erfindung der Ausgangsförderer kontinuierlich betrieben und somit ein übergabebedingter Produktivitätsverlust vermieden werden, da die gleichzeitige Übergabe der Produkte eine optimale Platzausnutzung des Ausgangsförderers ermöglicht. Auch eingangsseitig können bei entsprechender zeitlicher Abstimmung des Übergabevorgangs auf die Produktzufuhr Unterbrechungen bzw. Verzögerungen der Produktzufuhr vermieden werden.

Von Vorteil ist ferner, dass der Ausgangsförderer grundsätzlich eine beliebig große Breite aufweisen kann. Es ist dann lediglich eine Anpassung der Größe der Übergabestation bzw. der Anzahl der vorhandenen Übergabestationen erforderlich. Mehr Zeit für die Übergabe wird - anders als dies z.B. bei einem Sprungbandförderer der Fall wäre - trotz der großen Breite des Ausgangsförderers aber nicht benötigt. Sprungbandförderer sind außerdem nicht in beliebiger Länge erhältlich.

Die Lösung der Aufgabe erfolgt außerdem durch die Merkmale des Anspruchs 10 und insbesondere dadurch, dass bei dem Verfahren zum gleichzeitigen Übergeben einer Gruppe von transportierten Lebensmittelprodukten von einem Eingangsförderer an einen Ausgangsförderer, von dem Eingangsförderer nacheinander in einem Eingangsproduktstrom zugeführte Lebensmittelprodukte zunächst gesammelt werden und anschließend eine Gruppe gesammelter Lebensmittelprodukte gleichzeitig an den Ausgangsförderer übergeben wird. Der Endlosbandförderer, der ein Obertrum und ein Untertrum umfasst, wird derart um eine in Förderrichtung verlaufende Achse, die sich zwischen dem Obertrum und dem Untertrum erstreckt, verschwenkt, dass die darauf befindlichen Lebensmittelprodukte gleichzeitig abgekippt werden.

Insbesondere kann die Förderrichtung des Ausgangsförderers von der Förderrichtung des Eingangsförderers abweichen, wodurch eine Art Parallelisierung des Eingangsproduktstromes stattfinden kann, da dann Produkte die Übergabestation nacheinander erreichen, diese dagegen gleichzeitig verlassen. Hierbei kann beispielsweise das Sammeln und die Übergabe der Lebensmittelprodukte abwechselnd erfolgen.

Bevorzugte Ausführungsformen der Erfindung sind in den abhängigen Ansprüchen, der Beschreibung sowie der Zeichnung angegeben.

Die Übergabestation kann beispielsweise als Förderer und insbesondere als Endlosbandförderer ausgebildet sein, welcher im weiteren Verlauf auch als Übergabeförderer bezeichnet wird. Die einzelnen Lebensmittelprodukte können nacheinander dem Übergabeförderer zugeführt werden, welcher die Produkte dann selbst in die jeweilige Ausgangsstellung für die Übergabe an den Ausgangsförderer transportiert.

Ein Endlosbandförderer kann in beliebiger Länge bereitgestellt werden. Ferner passt sich ein Endlosbandförderer insbesondere hinsichtlich Ansteuerung und Produktaufnahme optimal in die in der Praxis bereits existierende Fördertechnik ein. Insbesondere erlaubt ein Endlosbandförderer auf besonders einfache Weise eine exakte Positionierung der zu übergebenden Produkte relativ zu vorgegebenen "Spuren" des Ausgangsförderers.

Ein Endlosbandförderer kann z.B. um eine sich zwischen Obertrum und Untertrum in Förderrichtung erstreckende Achse jeweils um 180° gedreht, d.h. gewendet, werden, wodurch nach erfolgter Übergabe ohne die Notwendigkeit einer Rückstellbewegung mit dem jeweils anderen Trum sofort wieder eine Aufnahmefläche für die Produkte bereitsteht. Durch entsprechende zeitliche Abstimmung der Wendevorgänge auf die Folge der zugeführten Produkte kann die Produktzufuhr kontinuierlich erfolgen, da ein ausreichend rasches Verschwenken des Endlosbandförderers problemlos möglich ist.

Prinzipiell kann die Produktübergabe, in Abhängigkeit insbesondere von der Beschaffenheit der Produkte und der Ausgestaltung der jeweiligen Fördertechnik, auch auf andere Art und Weise erfolgen. Erwähnt seien hier rein beispielhaft Schiebe- oder Blaseinrichtungen, die gleichzeitig auf die zu übergebenden Produkte einwirken, um sie an den Ausgangsförderer zu bewegen.

Gemäß einer Ausführungsform weicht die Förderrichtung des Ausgangsförderers von der Förderrichtung des Eingangsförderers ab und verläuft insbesondere quer dazu. Da die Übergabestation in der erwähnten Weise gewissermaßen als Sammelstation dient, im Bereich derer eine Gruppe an nacheinander einlaufenden Lebensmittelprodukten zunächst gesammelt wird, um diese anschließend gleichzeitig an den Ausgangsförderer zu übergeben, kann somit eine Parallelisierung des Eingangsproduktstromes stattfinden, denn die Produkte erreichen die Übergabestation nacheinander, verlassen diese dagegen gleichzeitig. Ferner kann durch die gleichzeitige Übergabe der Produkte quer zur Förderrichtung des Ausgangsförderers eine noch bessere Platzausnutzung des Ausgangsförderers erreicht werden. Auch eingangsseitig können bei entsprechender zeitlicher Abstimmung des Übergabevorgangs auf die Produktzufuhr Unterbrechungen bzw. Verzögerungen der Produktzufuhr vermieden werden.

Gemäß einer weiteren Ausführungsform erstreckt sich die Übergabestation unter einem rechten Winkel zur Förderrichtung des Ausgangsförderers. Hierdurch kann erreicht werden, dass jeweils gleichzeitig an den Ausgangsförderer übergebene Lebensmittelprodukte auch gleichzeitig die dem Ausgangsförderer nachgeordnete Bearbeitungsstation erreichen, was in produktionstechnischer Hinsicht in den meisten Fällen wünschenswert ist. Die Übergabestation kann sich prinzipiell aber auch schräg zur Förderrichtung erstrecken, was zur Folge hat, dass gleichzeitig an den Ausgangsförderer übergebene Produkte weiterhin in parallelen beabstandeten Reihen auf dem Ausgangsförderer angeordnet werden, diese Reihen sich aber nunmehr schräg zur Förderrichtung des Ausgangsförderers erstrecken.

Um keinen Produktivitätsverlust infolge der Beschickung der Slicer hinnehmen zu müssen, können erfindungsgemäß mehrere Schneidemaschinen vorgesehen sein, mit welchen der Eingangsförderer zur Erzeugung des Eingangsproduktstroms mit Lebensmittelprodukten beschickt wird. Dies erweist sich insbesondere dann als vorteilhaft, wenn die Schneidezeit zum Aufschneiden eines Produktlaibes im Wesentlichen genauso lang ist wie die Beladezeit der Maschine. In der Zeit, in der die eine Maschine beladen wird, kann daher die andere Maschine schneiden, und umgekehrt.

Die Erfindung wird im Folgenden beispielhaft unter Bezugnahme auf die Zeichnung beschrieben. Es zeigen:
- Fig. 1: eine Draufsicht auf eine erfindungsgemäße Transportvorrichtung mit einer Übergabestation in Form eines Endlosbandförderers;
- Fig. 2: eine perspektivische Darstellung des Übergabebereichs zwischen dem Eingangs- und dem Ausgangsförderer;
- Fig. 3: vier Schnittdarstellungen durch den Übergabeförderer entlang der Linie X-X in den Fig. 1 und 2; und
- Fig. 4: in den Abb. a und b Draufsichten (jeweils einschließlich einer perspektivischen Ansicht) auf eine andere erfindungsgemäße Transportvorrichtung mit einer Übergabestation mit mehreren Endlosbandförderern zeigt.

In allen Figuren sind gleiche oder einander entsprechende Elemente mit gleichen Bezugsziffern gekennzeichnet.

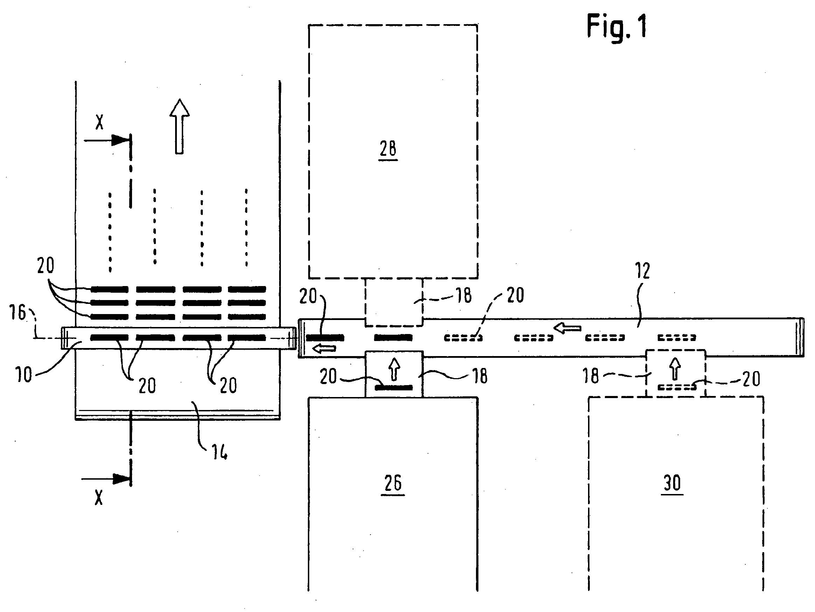

Zunächst wird unter Bezugnahme auf die Fig. 1 ein Teil einer Anlage beschrieben, mit welcher Produktscheiben 20 aus nicht genauer dargestellten Produktlaiben erzeugt und in mehreren gleichmäßig beabstandeten Reihen oder Spuren einer nachgelagerten Bearbeitungsstation, beispielsweise einem Garofen (nicht gezeigt), zugeführt werden können.

Die in der Fig. 1 dargestellte Produktionsanlage umfasst im Wesentlichen einen oder zwei (gestrichelt dargestellte Variante) Slicer 26, 28, 30, einen Eingangsförderer 12 in Form eines Endlosbandförderers, einen Ausgangsförderer 14 in Form eines Endlosbandförderers sowie einen Übergabeförderer 10, welcher ebenfalls als Endlosbandförderer ausgebildet ist.

Von den Schneidemaschinen 26, 28, 30 führen jeweils Austragsbänder 18 zu dem Eingangsförderer 12, um die abgetrennten Produktscheiben 20 dem Eingangsförderer 12 zuführen zu können. Sind zwei Slicer 28, 30 vorgesehen, so werden diese abwechselnd betrieben, nämlich in Beladepausen des jeweils anderen Slicers. Prinzipiell können auch mehr als zwei Slicer vorgesehen sein, die in geeigneter zeitlicher Abstimmung betrieben werden.

Auf dem Eingangsförderer 12 wird mittels des oder der Slicer letztlich ein kontinuierlicher Eingangsproduktstrom aus gleichmäßig beabstandeten Produktscheiben 20 gebildet. In der dargestellten Ausführungsform schließt sich der Übergabeförderer 10 direkt und gleichgerichtet an das Ende des Eingangsförderers 12 an, so dass der Übergabeförderer 10 mit den einzelnen Produktscheiben 20 des Produktstromes kontinuierlich beschickt wird.

Der Übergabeförderer 10 ist dabei so angeordnet, dass er den Ausgangsförderer 14 in einem Überschneidungsbereich überlappt, indem er sich in der hier gezeigten speziellen Ausführungsform oberhalb des Ausgangsförderers 14, und zwar senkrecht zu dessen Förderrichtung, erstreckt. Im Unterschied zu den bekannten, funktionsbedingt längenveränderlichen Sprungbandförderern ist der erfindungsgemäße Übergabeförderer 10 bezüglich des Eingangsförderers 12 und des Ausgangsförderers 14 stationär angeordnet.

Der dem Übergabeförderer 10 zugeführte Produktstrom wird mit dessen eigenem Endlosband in den Überschneidungsbereich transportiert, so dass die einzelnen Produktscheiben 20 in Flucht mit den Spuren (in der Fig. 1 durch die Punktreihen angedeutet) des Ausgangsförderers 14 bzw. des Ofens ausgerichtet werden können. Aus dieser Stellung der Produktscheiben 20, welche auch als Ausgangsstellung bezeichnet wird, wird die hier aus vier Scheiben 20 bestehende Gruppe dann gleichzeitig an den Ausgangsförderer 14 übergeben.

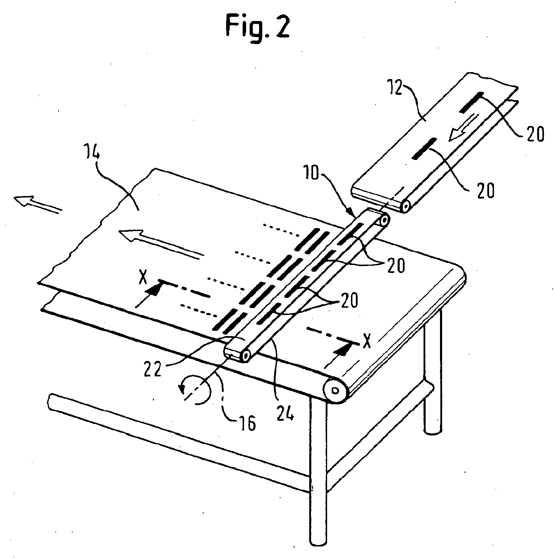

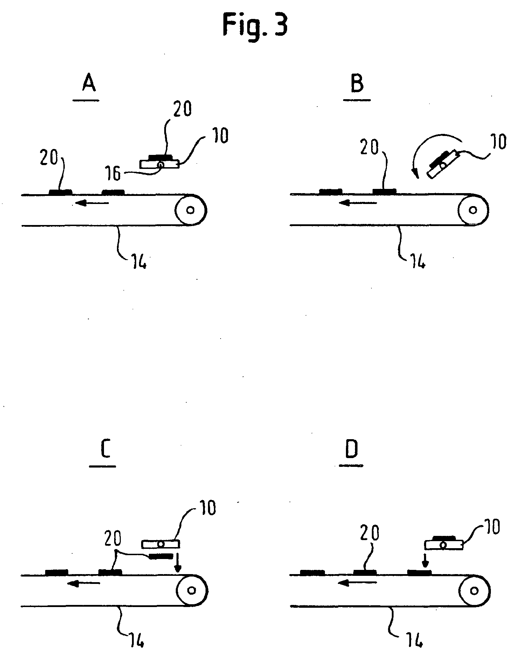

Die Fig. 2 zeigt den Übergabe- bzw. Überschneidungsbereich in einer vergrößerten perspektivischen Darstellung. Der Übergabeförderer 10 ist als Endlosbandförderer mit einem Obertrum 22 und einem Untertrum 24 ausgebildet. Zur Übergabe an den Ausgangsförderer 14 ist dem Endlosbandförderer 10 ein nicht dargestellter Schwenkmechanismus zugeordnet, mit dem der Endlosbandförderer 10 um eine Achse 16 geschwenkt werden kann, welche sich parallel zur Förderrichtung des Endlosbandförderers 10 und zwischen dem Obertrum 22 und dem Untertrum 24 erstreckt (Fig. 3).

Durch Betätigung des Schwenkmechanismus kann eine Kipp- bzw. Schwenkbewegung des Übergabeförderers 10 um die Drehachse 16 veranlasst werden, die hier jeweils 180° beträgt, d.h. der Übergabeförderer 10 wird jeweils gewendet, wodurch das Obertrum zum Untertrum wird, und umgekehrt. Die Gruppe der zuvor aufgenommenen Produktscheiben 20 wird hierbei als Ganzes auf den Ausgangsförderer 14 "gekippt", wobei jede Produktscheibe 20 genau auf eine der vorgegebenen Spuren fällt.

Fig. 3 zeigt die einzelnen Phasen des Übergabevorgangs. In der Situation A befinden sich die Produkte 20 in der zuvor erläuterten Ausgangsstellung auf dem Obertrum des Übergabe- bzw. Endlosbandförderers 10. Sobald die Ausgangsstellung erreicht ist, wird (Situation B) durch Betätigen des Schwenkmechanismus der Übergabeförderer 10 um die Achse 16 verschwenkt, was (Situation C) dazu führt, dass die Produkte 20 vom Obertrum, welches nun zum Untertrum des Übergabeförderers 10 wird, auf den Ausgangsförderer 14 fallen. Wie in der Situation D dargestellt, wird mit der Aufnahme der nächsten Gruppe von Produkten 20 begonnen, sobald die 180°-Wende des Endlosbandförderers 10 vollzogen und die erforderliche Richtungsumkehr des Bandantriebs des Endlosbandförderers 10 erfolgt ist.

Dies alles erfolgt ohne Unterbrechung oder Verzögerung des Eingangsproduktstromes (Fig. 1 und 2), da die 180°-Schwenkbewegungen - bezogen auf die Zeit zwischen zwei aufeinander folgenden Produktscheiben 20 - ausreichend schnell durchgeführt werden können und auch die erwähnte Umschaltung der Antriebsrichtung in zeitlicher Hinsicht unproblematisch ist, zumal sie bereits zu Beginn der Schwenkbewegung vorgenommen werden kann.

Gemäß Fig. 1 und 2 erfolgt die Zufuhr der Produktscheiben 20 mittels des Eingangsförderers 12 in einer Reihe, so dass auch die Übergabe auf den Ausgangsförderer einreihig erfolgt, wobei hier beispielhaft eine Produktreihe - entsprechend der benötigten Ofenspuren - genau vier hintereinander (eingangsseitig betrachtet) bzw. nebeneinander (ausgangsseitig betrachtet) liegende Produkte 20 umfasst. Diese Parallelisierung sequentiell einlaufender und gleichzeitig zu übergebender Produkte 20 ist prinzipiell auch mit einem mehrreihigen Eingangsproduktstrom möglich, wobei die Gruppe zu übergebender Produkte 20 auf dem Übergabeförderer 10 nicht in einer Reihe, sondern in einer "Matrix" aus n Eingangsreihen und m Ausgangsspalten angeordnet sind, wobei m - entsprechend der Breite bzw. Anzahl der Spuren des Ausgangsförderers 14 und unter Anpassung der Länge des Übergabeförderers 10 - unabhängig von n grundsätzlich beliebig gewählt werden kann.

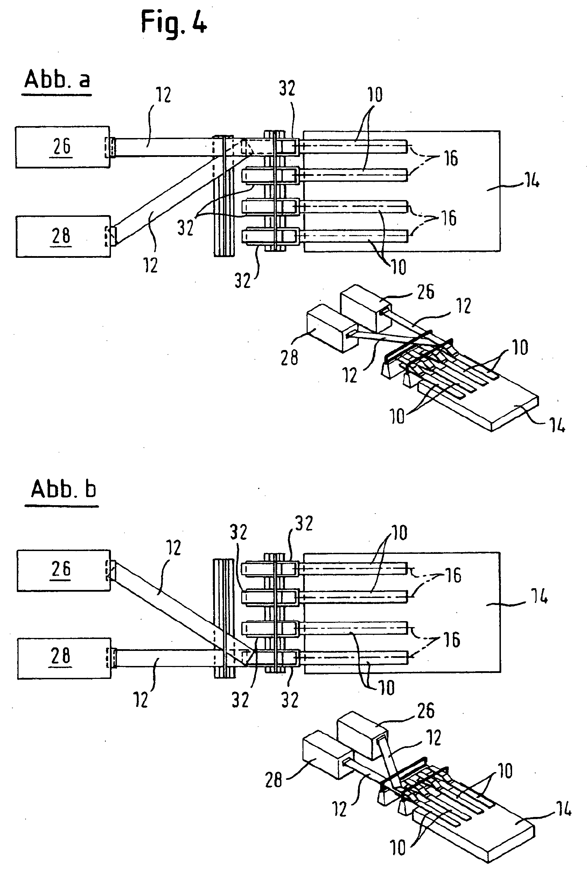

Abschließend wird nun unter Bezugnahme auf die Abbildungen a und b der Fig. 4 eine andere Produktionsanlage beschrieben, mit welcher ebenfalls Produktscheiben aus nicht genauer dargestellten Produktlaiben erzeugt und in mehreren gleichmäßig beabstandeten Reihen oder Spuren einer nachgelagerten Bearbeitungsstation zugeführt werden können.

Die in der Fig. 4 dargestellte Produktionsanlage umfasst im Wesentlichen zwei Slicer 26, 28, zwei davon wegführende Eingangsförderer 12 in Form von Endlosbandförderern, einen Ausgangsförderer 14 in Form eines Endlosbandförderers sowie vier Übergabeförderer 10, welche ebenfalls als Endlosbandförderer ausgebildet sind und welche über vier Ausgleichsförderer 32 mit einem Eingangsproduktstrom beschickt werden.

Auch hier sind zwei Slicer 26, 28 vorgesehen, damit jeweils in den Beladepausen des einen Slicers die Beschickung der Übergabeförderer 10 durch den anderen Slicer aufrechterhalten werden kann. Prinzipiell können auch mehr als zwei Slicer 26, 28 vorgesehen sein, die in geeigneter zeitlicher Abstimmung betrieben werden. In der Abb. a der Fig. 4 ist der Slicer 28 aktiv und beschickt die Ausgleichförderer 32 mit einem kontinuierlichen Produktstrom, wohingegen in der Abb. b der Fig. 4 der Slicer 26 aktiv ist.

Um die vier Übergabeförderer 10 nacheinander mit einem Produktstrom zu beschicken, sind die Eingangsförderer 12 um eine nahe dem jeweiligen Slicer befindliche senkrechte Achse schwenkbar. Diese Verteilung der Produkte auf die Ausgleichsförderer 32 kann auch durch eine andere Beweglichkeit bzw. Verstellbarkeit der Eingangsförderer 12 erreicht werden. Die Augleichförderer 32 sind hier zwischen die Übergabeförderer 10 und die Eingangsförderer 12 geschaltet, um die infolge der Verschwenkung unterschiedliche Reichweite der Eingangsförderer 12 auszugleichen.

Auch in dieser Ausführungsform überlappen sich die vier Übergabeförderer 10 mit dem Ausgangsförderer 14 in einem Überschneidungsbereich, wobei hier die Übergabeförderer 10 parallel zu dem Ausgangsförderer 14 ausgerichtet sind. Anders ausgedrückt fördern die vier Übergabeförderer 10 in dieselbe Richtung wie der Ausgangsförderer 14.

Während des Betriebs werden die vier Übergabeförderer 10 nacheinander über die Eingangsförderer 12 und die Ausgleichsförderer 32 mit einem Produktstrom beschickt, wozu die Eingangsförderer 12 in der erwähnten Weise verschwenkt werden. Der den Übergabeförderern 10 zugeführte Produktstrom wird mit deren eigenen Endlosbändern in den Überschneidungsbereich transportiert, so dass die einzelnen Produktscheiben mit den Spuren des Ausgangsförderers 14 bzw. des Ofens ausgerichtet sind. Aus dieser Stellung der Produktscheiben 20 werden die Lebensmittelprodukte dann wiederum gruppenweise und gleichzeitig an den Ausgangsförderer 14 übergeben, indem die Übergabeförderer 10 in der zuvor beschriebenen Weise verschwenkt bzw. verkippt werden.

Die Besonderheit dieser Ausführungsform besteht in der Anordnung mehrerer Übergabeförderer 10 parallel nebeneinander, wobei die Übergabeförderer 10 nicht gleichzeitig, sondern nacheinander beschickt werden, nämlich mittels des hier verschwenkbaren Eingangsförderers 12.

Um zu vermeiden, dass durch das nacheinander erfolgende Beschicken und Abkippen der Übergabeförderer 10 bei kontinuierlich laufendem Ausgangsförderer 14 in den einzelnen Spuren Lücken zwischen aufeinander folgenden Gruppen entstehen, ist die Fördergeschwindigkeit des Ausgangsförderers 14 so auf die Fördergeschwindigkeit der Ausgleichsförderer 32 und der Eingangsförderer 12 abgestimmt, dass jeder Übergabeförderer 10 nach Übergabe einer Gruppe rechtzeitig zur Übergabe der nächsten Gruppe bereit ist, um diese nächste Gruppe ohne Lücke zur vorherigen Gruppe an den Ausgangsförderer 14 übergeben zu können. Der Ausgangsförderer 14 wird also mit einer geringeren Geschwindigkeit betrieben als die eingangsseitigen Förderer, und zwar insbesondere mit einer Geschwindigkeit derart, dass sämtliche Förderer kontinuierlich betrieben werden können.

Insgesamt lässt sich auch auf diese Weise eine lückenlose "Matrix" von Produkten mit einer der Anzahl von Übergabeförderern 10 entsprechenden Anzahl von Spuren auf dem Ausgangsförderer 14 erzielen. Dabei kann durch entsprechende Abstimmung der Fördergeschwindigkeiten und der Verteilung auf die einzelnen Übergabeförderer erreicht werden, dass innerhalb jeder Spur die nacheinander an den Ausgangsförderer übergebenen Produktgruppen insofern ununterscheidbar sind, als der Produktabstand innerhalb der Gruppen gleich dem Abstand zwischen aufeinander folgenden Gruppen, d.h. gleich dem Abstand zwischen dem letzten Produkt einer Gruppe und dem ersten Produkt der folgenden Gruppe ist.

Die Variante der Fig. 4 unterscheidet sich von der Variante gemäß Fig. 1 bis 3 durch die Orientierung der Produktscheiben in Bezug auf die Förderrichtung des Ausgangsförderers 14. Dies kann sich bei einer von einer Kreisform bzw. einer Quadratform abweichenden Gestalt der Produktscheiben und insbesondere bei rechteckförmigen Produktscheiben - wie dargestellt - auf die Prozessgeschwindigkeit auswirken. Bei der Variante gemäß Fig. 1 bis 3 können aufgrund der Querausrichtung der rechteckförmigen Produkte auf dem Ausgangsförderer 14 pro in Förderrichtung gemessener Längeneinheit mehr Produkte untergebracht werden als bei der Variante gemäß Fig. 4. Bei gleicher Anzahl von Spuren auf dem Ausgangsförderer 14 und gleicher Geschwindigkeit des Ausgangsförderers 14 ist von der Übergabestation bei der Variante gemäß Fig. 1 bis 3 folglich ein höherer Produktdurchsatz zu erbringen als bei der Variante gemäß Fig. 4, was insgesamt eingangsseitig eine Produkthandhabung bei entsprechend höherer Prozessgeschwindigkeit mit sich bringt. -.-.-.

### Bezugszeichenliste

- 10: Übergabestation, Übergabeförderer
- 12: Eingangsförderer
- 14: Ausgangsförderer
- 16: Schwenkachse
- 18: Austragsband
- 20: Lebensmittelprodukt, Produktscheibe
- 22: Obertrum
- 24: Untertrum
- 26: Schneidemaschine, Slicer
- 28: Schneidemaschine, Slicer
- 30: Schneidemaschine, Slicer
- 32: Ausgleichsförderer

## Patentansprüche

1. Vorrichtung zum Transport von Lebensmittelprodukten (20), insbesondere von mittels einer Schneidemaschine (26, 28, 30) erzeugten Produktscheiben (20), mit zumindest einer Übergabestation (10) zum Aufnehmen von Lebensmittelprodukten (20) eines von zumindest einem Eingangsförderer (12) einlaufenden Eingangsproduktstroms und zum Übergeben der Lebensmittelprodukte (20) an einen Ausgangsförderer (14), wobei
die Übergabestation (10) eine Übergabeeinrichtung umfasst, die dazu ausgebildet ist, eine Gruppe nacheinander aufgenommener Lebensmittelprodukte (20) gleichzeitig an den Ausgangsförderer (14) zu übergeben,
die Übergabeeinrichtung als Schwenkmechanismus ausgebildet ist, die als Übergabeförderer (10) ausgebildete Übergabestation als Endlosbandförderer mit einem Obertrum (22) und einem Untertrum (24) ausgebildet ist
und sich der Übergabeförderer (10) oberhalb des Ausgangsförderers (14) erstreckt,
**dadurch gekennzeichnet, dass**
sich die Schwenkachse (16) in Förderrichtung des Übergabeförderers (10) zwischen dem Obertrum (22) und dem Untertrum (24) erstreckt.

2. Vorrichtung nach Anspruch 1,
**dadurch gekennzeichnet, dass**
die Übergabestation (10) stationär in Bezug auf den Eingangsförderer (12) und/oder den Ausgangsförderer (14) angeordnet ist.

3. Vorrichtung nach Anspruch 1 oder 2,
**dadurch gekennzeichnet, dass**
die Förderrichtung des Ausgangsförderers (14) von der Förderrichtung des Eingangsförderers (12) abweicht und insbesondere quer dazu verläuft.

4. Vorrichtung nach Anspruch 3,
**dadurch gekennzeichnet, dass**
sich der Übergabeförderer (10) mit dem Ausgangsförderer (14) quer zu dessen Förderrichtung überschneidet oder überlappt.

5. Vorrichtung nach zumindest einem der vorstehenden Ansprüche, **dadurch gekennzeichnet, dass**
die gleichzeitige Übergabe der Gruppe aufgenommener Lebensmittelprodukte (20) unter Ausnutzung der Schwerkraft erfolgt.

6. Vorrichtung nach zumindest einem der Ansprüche 3 bis 5,
**dadurch gekennzeichnet, dass**
die Übergabeeinrichtung dazu ausgebildet ist, den Übergabeförderer (10), insbesondere eine Auflagefläche für die Lebensmittelprodukte (20), durch Verschwenken um jeweils 180° zu wenden.

7. Vorrichtung nach zumindest einem der vorstehenden Ansprüche,
**dadurch gekennzeichnet, dass**
der Übergabeförderer (10) zur Beibehaltung seiner Förderrichtung nach jeder Wendung um 180° zu einer Richtungsumkehr seines Förderantriebs in der Lage ist.

8. Vorrichtung nach zumindest einem der vorstehenden Ansprüche,
**dadurch gekennzeichnet, dass**
der Übergabeförderer (10) im Wesentlichen unter einem rechten Winkel oder parallel zur Förderrichtung des Ausgangsförderers (14) angeordnet ist, wobei im Falle einer parallelen Anordnung vorzugsweise mehrere Übergabeförderer (10) nebeneinander angeordnet sind.

9. Vorrichtung nach zumindest einem der vorstehenden Ansprüche,
**dadurch gekennzeichnet, dass**
die Förderrichtung des Übergabeförderers (10) und die Förderrichtung des Eingangsförderers (12) im Wesentlichen übereinstimmen.

10. Verfahren zum gleichzeitigen Übergeben einer Gruppe von transportierten Lebensmittelprodukten (20), insbesondere einer Gruppe von mittels einer Schneidemaschine (26, 28, 30) erzeugten Produktscheiben (20), von einem einen Endlosbandförderer (10) umfassenden Eingangsförderer (12) an einen Ausgangsförderer (14), wobei von dem Eingangsförderer (12) nacheinander in einem Eingangsproduktstrom zugeführte Lebensmittelprodukte (20) zunächst gesammelt werden und anschließend eine Gruppe gesammelter Lebensmittelprodukte (20) gleichzeitig an den Ausgangsförderer (14) übergeben wird, wobei
der Endlosbandförderer (10), der ein Obertrum (22) und ein Untertrum (24) umfasst, derart um eine in Förderrichtung verlaufende Achse (16) verschwenkt wird, dass die darauf befindlichen Lebensmittelprodukte (20) gleichzeitig abgekippt werden,
**dadurch gekennzeichnet, dass**
sich die Achse (16) zwischen dem Obertrum (22) und dem Untertrum (24) erstreckt.

11. Verfahren nach Anspruch 10,
**dadurch gekennzeichnet, dass**
durch die Übergabe eine Parallelisierung der Lebensmittelprodukte derart erfolgt, dass im Eingangsproduktstrom hintereinander liegende Lebensmittelprodukte mittels des Ausgangsförderers nebeneinander liegend und/oder senkrecht zur Förderrichtung des Ausgangsförderers (14) gegeneinander versetzt liegend transportiert werden.

12. Verfahren nach Anspruch 10 oder 11,
**dadurch gekennzeichnet, dass**
das Sammeln und die Übergabe der Lebensmittelprodukte (20) ohne Unterbrechung oder Verzögerung des Eingangsförderers (12) und/oder des Ausgangsförderers (14) erfolgen.

13. Verfahren nach zumindest einem der Ansprüche 10 bis 12,
**dadurch gekennzeichnet, dass**
die Übergabe getaktet in zeitlicher Abstimmung mit der Zufuhr der Lebensmittelprodukte (20) durch den Eingangsförderer (12) erfolgt.

14. Verfahren nach zumindest einem der Ansprüche 10 bis 13,
**dadurch gekennzeichnet, dass**
die Förderrichtung des Ausgangsförderers (14) von der Förderrichtung des Eingangsförderers (12) abweicht.

## Claims

1. An apparatus for the transport of food products (20), in particular of product slices (20) produced by means of a cutting machine (26, 28, 30), having at least one transfer station (10) for the picking up of food products (20) of an incoming product flow running in from at least one incoming conveyor (12) and for the transfer of the food products (20) to an outgoing conveyor (14), wherein
the transfer station (10) comprises a transfer device which is configured to simultaneously transfer a group of food products (20) taken up after one another to the outgoing conveyor (14);
the transfer device is configured as a pivot mechanism;
the transfer station configured as a transfer conveyor (10) is configured as an endless belt conveyor with an upper run (22) and a lower run (24);
and the transfer conveyor (10) extends above the outgoing conveyor (14),
**characterized in that**
the pivot axis (16) extends in the direction of conveying of the transfer conveyor (10) between the upper run (22) and the lower run (24).

2. An apparatus in accordance with claim 1,
**characterized in that**
the transfer station (10) is arranged in a stationary manner with respect to the incoming conveyor (12) and/or to the outgoing conveyor (14).

3. An apparatus in accordance with claim 1 or claim 2,
**characterized in that**
the direction of conveying of the outgoing conveyor (14) differs from the direction of conveying of the incoming conveyor (12) and in particular extends transversely thereto.

4. An apparatus in accordance with claim 3,
**characterized in that**
the transfer conveyor (10) coincides or overlaps with the outgoing conveyor (14) transversely to its direction of conveying.

5. An apparatus in accordance with at least one of the preceding claims,
**characterized in that**
the simultaneous transfer of the group of taken up food products (20) takes place while using gravity.

6. An apparatus in accordance with at least one of the claims 3 to 5,
**characterized in that**
the transfer device is configured to turn the transfer conveyor (10), in particular a contact surface for the food products (20), by 180° in each case by pivoting.

7. An apparatus in accordance with at least one of the preceding claims,
**characterized in that**
the transfer conveyor (10) is capable of a reversal of direction of its conveyor drive for the maintenance of its direction of conveying after each turn through 180°.

8. An apparatus in accordance with at least one of the preceding claims,
**characterized in that**
the transfer conveyor (10) is arranged substantially at a right angle or parallel to the direction of conveying of the outgoing conveyor (14), with a plurality of transfer conveyors (10) preferably being arranged next to one another in the case of a parallel arrangement.

9. An apparatus in accordance with at least one of the preceding claims,
**characterized in that**
the direction of conveying of the transfer conveyor (10) and the direction of conveying of the incoming conveyor (12) substantially coincide.

10. A method for the simultaneous transfer of a group of transported food products (20), in particular of a group of product slices (20) produced by means of a cutting machine (26, 28, 30), from an incoming conveyor (12) comprising an endless belt conveyor (10) to an outgoing conveyor (14), wherein food products (20) supplied after one another in an incoming product flow from the incoming conveyor (12) are initially collected and subsequently a group of collected food products (20) is simultaneously transferred to the outgoing conveyor (14) and wherein
the endless belt conveyor (10) which comprises an upper run (22) and a lower run (24) is pivoted about an axis (16) extending in the direction of conveying such that the food products (20) located thereon are tipped off simultaneously,
**characterized in that**
the axis (16) extends between the upper run (22) and the lower run (24).

11. A method in accordance with claim 10,
**characterized in that**
a parallelization of the food products takes place by the transfer such that food products disposed after one another in the incoming product flow are transported by means of the outgoing conveyor disposed next to one another and/or disposed offset with respect to one another perpendicular to the direction of conveying of the outgoing conveyor (14).

12. A method in accordance with claim 10 or claim 11,
**characterized in that**
the collection and the transfer of the food products (20) take place without interruption or delay of the incoming conveyor (12) and/or of the outgoing conveyor (14).

13. A method in accordance with at least one of the claims 10 to 12,
**characterized in that**
the transfer takes place in a clocked manner in time coordination with the supply of the food products (20) by the incoming conveyor (12).

14. A method in accordance with at least one of the claims 10 to 13,
**characterized in that**
the direction of conveying of the outgoing conveyor (14) differs from the direction of conveying of the incoming conveyor (12).

## Revendications

1. Dispositif de transport de produits alimentaires (20), en particulier de tranches de produits (20) engendrées au moyen d'une trancheuse (26, 28, 30), comportant au moins une station de transfert (10) pour la réception de produits alimentaires (20) d'un flux de produits d'entrée arrivant depuis au moins un convoyeur d'entrée et pour transférer les produits alimentaires (20) à un convoyeur de sortie, dans lequel
la station de transfert (10) comporte un dispositif de transfert qui est réalisé pour transférer simultanément sur un convoyeur de sortie (14) un groupe de produits alimentaires reçus les uns après les autres,
le dispositif de transfert est réalisé sous forme de mécanisme à pivotement, la station de transfert réalisée sous forme de convoyeur de transfert (10) est réalisée sous forme de convoyeur à courroie sans fin avec un brin supérieur (22) et un brin inférieur (24),
et le convoyeur de transfert (10) s'étend au-dessus du convoyeur de sortie (14),
**caractérisé en ce que**
l'axe de pivotement (16) s'étend en direction de convoyage du convoyeur de transfert (10) entre le brin supérieur (22) et le brin inférieur (24).

2. Dispositif selon la revendication 1, **caractérisé en ce que** la station de transfert (10) est agencée stationnaire par rapport au convoyeur d'entrée (12) et/ou au convoyeur de sortie (14).

3. Dispositif selon la revendication 1 ou 2, **caractérisé en ce que** la direction de convoyage du convoyeur de sortie (14) dévie de la direction de convoyage du convoyeur d'entrée (12) et s'étend en particulier transversalement à celle-ci.

4. Dispositif selon la revendication 3, **caractérisé en ce que** le convoyeur de transfert (10) recoupe ou chevauche le convoyeur de sortie (14) transversalement à sa direction de convoyage.

5. Dispositif selon au moins l'une des revendications précédentes, **caractérisé en ce que** le transfert simultané du groupe de produits alimentaires (20) reçus a lieu en exploitant la pesanteur.

6. Dispositif selon au moins l'une des revendications 3 à 5, **caractérisé en ce que** le dispositif de transfert est réalisé pour faire tourner le convoyeur de transfert (10), en particulier une surface d'appui pour les produits alimentaires (20) par retournement de respectivement 180°.

7. Dispositif selon au moins l'une des revendications précédentes, **caractérisé en ce que** pour maintenir sa direction de convoyage après chaque retournement de 180°, le convoyeur de transfert (10) est en mesure d'inverser la direction de son élément d'entraînement.

8. Dispositif selon au moins l'une des revendications précédentes, **caractérisé en ce que** le convoyeur de transfert (10) est agencé sensiblement en angle droit ou parallèlement à la direction de convoyage du convoyeur de sortie (14), de préférence plusieurs convoyeurs de transfert (10) étant agencés les uns à côté des autres dans le cas d'un agencement parallèle.

9. Dispositif selon au moins l'une des revendications précédentes, **caractérisé en ce que** la direction de convoyage du convoyeur de transfert (10) et la direction de convoyage du convoyeur d'entrée (12) coïncident sensiblement.

10. Procédé de transfert simultané d'un groupe de produits alimentaires (20) transportés, en particulier d'un groupe de tranches de produits (20) engendrées au moyen d'une trancheuse (26, 28, 30), depuis un convoyeur d'entrée (12) comportant un convoyeur à courroie sans fin (10) jusqu'à un convoyeur de sortie (14), dans lequel des produits alimentaires (20) amenés les uns après les autres dans un flux de produits d'entrée par le convoyeur d'entrée (12) sont tout d'abord collectés et ensuite, un groupe de produits alimentaires (20) collectés est transféré simultanément au convoyeur de sortie (14), dans lequel le convoyeur à courroie sans fin (10) qui comprend un brin supérieur (22) et un brin inférieur (24) est pivoté autour d'un axe (16) s'étendant en direction de convoyage de telle sorte que les produits alimentaires (20) qui se trouvent sur celui-ci sont déversés simultanément, **caractérisé en ce que** l'axe (16) s'étend entre le brin supérieur (22) et le brin inférieur (24).

11. Procédé selon la revendication 10, **caractérisé en ce que** par le transfert a lieu une parallélisation des produits alimentaires de telle sorte que des produits alimentaires posés les uns derrière les autres dans le flux de produits d'entrée sont transportés au moyen du convoyeur de sortie en étant posés les uns à côté des autres et/ou décalés les uns par rapport aux autres perpendiculairement à la direction de convoyage du convoyeur de sortie (14).

12. Procédé selon la revendication 10 ou 11, **caractérisé en ce que** la collecte et le transfert des produits alimentaires (20) sont effectués sans interruption ou retard du convoyeur d'entrée (12) et/ou du convoyeur de sortie (14).

13. Procédé selon au moins l'une des revendications 10 à 12, **caractérisé en ce que** le transfert est effectué de manière cadencée et de manière synchronisée avec l'amenée des produits alimentaires (20) par le convoyeur d'entrée (12).

14. Procédé selon au moins l'une des revendications 10 à 13, **caractérisé en ce que** la direction de convoyage du convoyeur de sortie (14) dévie de la direction de convoyage du convoyeur d'entrée (12).
